# EUROPEAN PATENT APPLICATION

(11) **EP 4 700 592 A1**
(43) Date of publication of application: **25.02.2026**
(21) Application number: 24844605.6
(22) Date of filing: 09.07.2024
(51) Int. Cl.: G06F 15/17, G06F 15/78

(54) **INTER-PROCESSOR COMMUNICATION METHOD AND APPARATUS FOR SYSTEM ON CHIP, AND STORAGE MEDIUM AND ELECTRONIC DEVICE**

(30) Priority: 26.07.2023 CN 202310923624
(71) Applicant: Horizon Journey (Hangzhou) Technology Co., Ltd., Hangzhou, Zhejiang 310000 (CN)
(72) Inventor: WANG, Tao, Hangzhou, Zhejiang 310000 (CN)
(74) Representative: Patentanwälte Magenbauer & Kollegen Partnerschaft mbB
(86) International application number: PCT/CN2024/104499
(87) International publication number: WO 2025/020911

(57) **Abstract**

This disclosure provides an inter-core communication method and apparatus for a system-on-chip, a storage medium, and an electronic device. The inter-core communication method for a system-on-chip includes: generating a communication request for inter-core communication between a first processing core and a second processing core; determining a target media access controller based on the communication request; reading inter-core communication data from a first address space corresponding to the first processing core based on the communication request and the target media access controller; and transmitting the inter-core communication data to a second address space corresponding to the second processing core based on the target media access controller. The first address space and the second address space correspond to different address spaces in a memory, so that address spaces accessed by the first processing core and the second processing core are independent of each other, which can improve security and stability of communication. Moreover, parallel communication can be performed by using a plurality of channels of a media access controller, so that inter-core communication with a large amount of data can be implemented, thereby improving high efficiency and flexibility of the inter-core communication.

## Description

This disclosure claims the priority to the Chinese patent application No. 202310923624.X, filed on July 26, 2023 and entitled "INTER-CORE COMMUNICATION METHOD AND APPARATUS FOR SYSTEM-ON-CHIP, STORAGE MEDIUM, AND ELECTRONIC DEVICE", which is incorporated herein by references in its entirety.

### TECHNICAL FIELD

This disclosure relates to the technical field of chips, and in particular, to an inter-core communication method and apparatus for a system-on-chip, a storage medium, and an electronic device.

### BACKGROUND

In recent years, performance of processors in a system-on-chip (SoC) has become increasingly strong, and both general-purpose processors and embedded processors have entered an era of multi-core processors. In a multi-core processor, cores need to perform inter-core communication (inter-processor communication, IPC) to achieve collaborative work, so as to fully leverage overall performance of a chip. In related technologies, inter-core communication may be implemented by using a shared memory or an internal bus. If the inter-core communication is implemented by using the shared memory, it cannot be ensured that resources of a plurality of virtual machines running on a plurality of cores are independent of each other, which affects stability of the virtual machines. If the inter-core communication is implemented by using the internal bus, bi-directional communication is not flexible enough to implement inter-core communication with a large amount of data.

### SUMMARY

To resolve the foregoing technical problem, this disclosure provides an inter-core communication method and apparatus for a system-on-chip, a storage medium, and an electronic device, to implement inter-core communication with independent address spaces for multi-core access, which can improve security, stability, high efficiency, and flexibility of the inter-core communication.

According to a first aspect of an embodiment of this disclosure, an inter-core communication method for a system-on-chip is provided, including:
generating a communication request for inter-core communication between a first processing core and a second processing core;
determining a target media access controller based on the communication request;
reading inter-core communication data from a first address space corresponding to the first processing core based on the communication request and the target media access controller; and
transmitting the inter-core communication data to a second address space corresponding to the second processing core based on the target media access controller, wherein the first address space and the second address space correspond to different address spaces in a memory.

According to a second aspect of an embodiment of this disclosure, an inter-core communication apparatus for a system-on-chip is provided, including:
a generation module, configured to generate a communication request for inter-core communication between a first processing core and a second processing core;
a first determining module, configured to determine a target media access controller based on the communication request;
a first reading module, configured to read inter-core communication data from a first address space corresponding to the first processing core based on the communication request and the target media access controller; and
a transmission module, configured to transmit the inter-core communication data to a second address space corresponding to the second processing core based on the target media access controller, wherein the first address space and the second address space correspond to different address spaces in a memory.

According to a third aspect of an embodiment of this disclosure, a computer readable storage medium is provided. The storage medium stores a computer program, when executed by a processor, causes the processor to implement the inter-core communication method for a system-on-chip according to the embodiment in the first aspect of this disclosure.

According to a fourth aspect of an embodiment of this disclosure, an electronic device is provided. The electronic device includes: a processor; and a memory configured to store processor-executable instructions. The processor is configured to read the instructions from the memory, and execute the instructions to implement the inter-core communication method for a system-on-chip according to the embodiment in the first aspect of this disclosure.

According to a fifth aspect of an embodiment of this disclosure, a computer program product is provided. When instructions in the computer program product are executed by a processor, the inter-core communication method for a system-on-chip according to the embodiment in the first aspect of this disclosure is implemented.

According to the inter-core communication method for a system-on-chip provided in this disclosure, the communication request is generated when the first processing core on the system-on-chip needs to perform inter-core communication with the second processing core, and the target media access controller is determined based on the communication request. Subsequently, the inter-core communication data is read from the first address space corresponding to the first processing core based on the communication request by using the target media access controller, and is transmitted to the second address space corresponding to the second processing core. The first address space and the second address space correspond to different address spaces in a memory, so as to ensure that address spaces accessed by the first processing core and the second processing core are independent of each other, which can improve security and stability of communication. Moreover, parallel communication can be performed by using a plurality of channels of a media access controller, so that inter-core communication with a large amount of data can be implemented, thereby improving high efficiency and flexibility of the inter-core communication.

### BRIEF DESCRIPTION OF THE DRAWINGS

FIG. 1A is a schematic diagram of an inter-core communication method provided by an exemplary embodiment of this disclosure applied to an on-chip multi-core communication scenario;
FIG. 1B is a schematic diagram of the inter-core communication method provided by an exemplary embodiment of the present disclosure applied to an inter-chip multi-core communication scenario;
FIG. 1C is a schematic diagram of a scenario in which a processing core communicates with an external device according to an exemplary embodiment of this disclosure;
FIG. 2 is a schematic flowchart of an inter-core communication method for a system-on-chip according to an exemplary embodiment of this disclosure;
FIG. 3 is a schematic flowchart of an inter-core communication method for a system-on-chip according to another exemplary embodiment of this disclosure;
FIG. 4 is a schematic flowchart of an inter-core communication method for a system-on-chip according to still another exemplary embodiment of this disclosure;
FIG. 5 is a schematic flowchart of an inter-core communication method for a system-on-chip according to yet another exemplary embodiment of this disclosure;
FIG. 6 is a schematic flowchart of an inter-core communication method for a system-on-chip according to still yet another exemplary embodiment of this disclosure;
FIG. 7 is a schematic flowchart of an inter-core communication method for a system-on-chip according to a further exemplary embodiment of this disclosure;
FIG. 8 is a schematic flowchart of an inter-core communication method for a system-on-chip according to a still further exemplary embodiment of this disclosure;
FIG. 9 is a schematic flowchart of an inter-core communication method for a system-on-chip according to a yet further exemplary embodiment of this disclosure;
FIG. 10 is a schematic flowchart of an inter-core communication method for a system-on-chip according to a still yet further exemplary embodiment of this disclosure;
FIG. 11 is a schematic flowchart of an inter-core communication method for a system-on-chip according to even yet another exemplary embodiment of this disclosure;
FIG. 12 is a schematic diagram of a structure of an inter-core communication apparatus for a system-on-chip according to an exemplary embodiment of this disclosure;
FIG. 13 is a schematic diagram of a structure of an inter-core communication apparatus for a system-on-chip according to another exemplary embodiment of this disclosure; and
FIG. 14 is a schematic diagram of a compositional structure of an electronic device according to an exemplary embodiment of this disclosure.

### DETAILED DESCRIPTION OF THE EMBODIMENTS

Exemplary embodiments of this disclosure are described below in detail with reference to accompanying drawings. Obviously, the embodiments described are merely some, rather than all of embodiments of this disclosure. It should be understood that this disclosure is not limited by the exemplary embodiments described herein.

It should be noted that unless otherwise specified, the scope of this disclosure is not limited by relative arrangement, numeric expressions, and numerical values of components and steps described in these embodiments.

Technologies, methods, and devices known by a person of ordinary skills in the art may not be discussed in detail herein. However, where appropriate, the technologies, the methods, and the devices shall be regarded as a part of the specification.

### Overview of this disclosure

Multi-core processors are increasingly widely applied in various technical fields due to powerful parallel computing capabilities, low power consumption, and high integration. In the multi-core processor, cores need to perform inter-core communication (inter-processor communication, IPC) to achieve collaborative work. In related technologies, inter-core communication mainly adopts the following two modes. A first mode is inter-core communication based on a shared memory. By adopting this mode, a plurality of cores can all read data from the shared memory, which cannot ensure that address spaces accessed by the plurality of cores are independent of each other, affecting security and stability of communication. A second mode: Inter-core communication based on an internal bus adopts serial communication using a low-speed peripheral interface, which makes bi-directional communication not flexible enough to implement inter-core communication with a large amount of data. How to perform inter-core communication at a high speed efficiently and stably has become one of problems that urgently need to be resolved by a chip with the multi-core processor.

To resolve the problem in the related technologies that security, stability, high efficiency, and flexibility cannot be considered at the same time for the inter-core communication, this disclosure provides an inter-core communication method for a system-on-chip. According to this method, communication between a plurality of cores is implemented by using a media access controller. The cores correspond to different address spaces, so as to ensure that the address spaces accessed by the cores are independent of each other. In this way, mutual influence between a plurality of processing cores may be avoided, which can improve security and stability of communication. Moreover, parallel communication can be performed by using a plurality of channels of a media access controller, so that inter-core communication with a large amount of data can be implemented, thereby improving high efficiency and flexibility of the inter-core communication.

### Exemplary system

According to a practical scenario, a plurality of processing cores for communication may be located on a same system-on-chip or on different systems on chip. In an embodiment of this disclosure, communication between a plurality of processing cores located in a same system-on-chip is referred to as on-chip multi-core communication; and communication between a plurality of processing cores located in different systems on chip is referred to as inter-chip multi-core communication. The processing core on the system-on-chip may also communicate with an external device. The three communication application scenarios of processing cores are exemplarily described below.

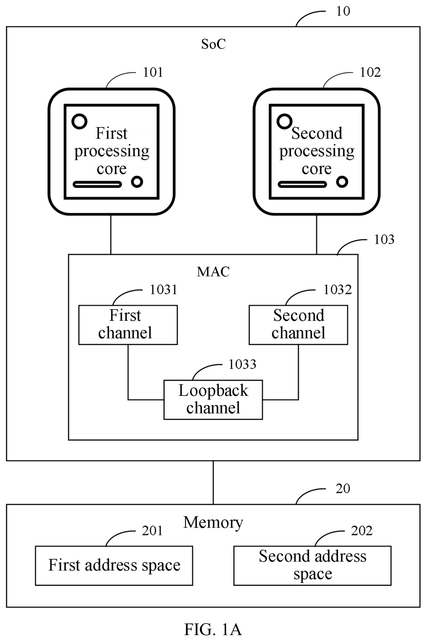

FIG. 1A is a schematic diagram of an inter-core communication method provided by an exemplary embodiment of this disclosure applied to an on-chip multi-core communication scenario. As shown in FIG. 1A, a system-on-chip SoC 10 includes two processing cores (101 and 102) for inter-core communication and a media access controller (MAC) 103.

To distinguish between the two processing cores, the processing core that initiates communication actively is referred to as a first processing core 101, and the processing core that passively receives the communication is referred to as a second processing core 102.

A memory 20 includes a first address space 201 and a second address space 202. The first address space 201 is an address space pre-allocated to the first processing core 101, and the second address space 202 is an address space pre-allocated to the second processing core 102.

The MAC 103 is used for on-chip multi-core communication, and includes a plurality of channels (which are not all shown in FIG. 1A). A first channel 1031 is a channel pre-allocated to the first processing core 101, a second channel 1032 is a channel pre-allocated to the second processing core 102, and a loopback channel 1033 is used for on-chip multi-core communication. The loopback channel 1033 is coupled to the first channel 1031 and the second channel 1032, respectively.

During inter-core communication, the first processing core 101 generates a communication request, which requests inter-core communication with the second processing core 102. Based on the communication request, inter-core communication data is read from the first address space 201 through the first channel 1031 of the MAC 103, is transmitted to the second channel 1032 through the loopback channel 1033, and is further transmitted to the second address space 202 through the second channel 1032.

In this embodiment of this disclosure, the second address space 202 and the first address space 201 are different address spaces in the memory 20, so that the address spaces accessed by the first processing core 101 and the second processing core 102 are independent of each other. In this way, mutual influence between a plurality of processing cores may be avoided, which can improve security and stability of communication. Moreover, parallel communication can be performed by using a plurality of channels of the MAC 103, so that high-speed transmission of a large amount of data can be implemented, thereby improving high efficiency and flexibility of the inter-core communication.

In some embodiments, after the inter-core communication data is transmitted to the second address space 202, the MAC 103 may generate an interrupt message and send the same to the second processing core 102 through the second channel 1032 of the MAC 103. The second processing core 102 reads the inter-core communication data from the second address space 202 based on the interrupt message, and processes the inter-core communication data.

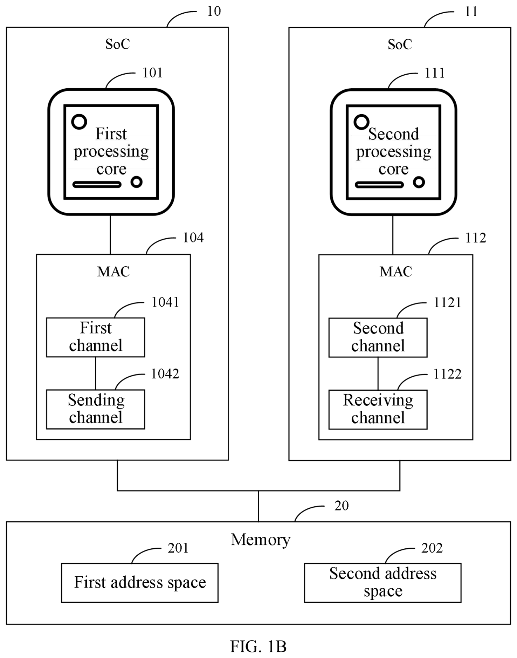

FIG. 1B is a schematic diagram of the inter-core communication method provided by an exemplary embodiment of this disclosure applied to an inter-chip multi-core communication scenario. As shown in FIG. 1B, each of a SoC 10 and a SoC 11 includes a processing core and a MAC.

To distinguish between two processing cores and two MACs, the processing core on the SoC 10 that initiates communication actively is referred to as a first processing core 101, and the processing core on the SoC 11 that passively receives the communication is referred to as a second processing core 111.

A memory 20 includes a first address space 201 and a second address space 202. The first address space 201 is an address space pre-allocated to the first processing core 101, and the second address space 202 is an address space pre-allocated to the second processing core 111.

A MAC 104 on the SoC 10 and a MAC 112 on the SoC 11 are used for inter-chip multi-core communication. The MAC 104 includes a plurality of channels (which are not all shown in FIG. 1B), wherein a first channel 1041 is a channel pre-allocated to the first processing core 101, a sending channel 1042 is configured to send inter-core communication data to other SoCs (such as the SoC 11 in FIG. 1B), and the first channel 1041 is coupled to the sending channel 1042. The MAC 112 also includes a plurality of channels (which are not all shown in FIG. 1B), wherein a second channel 1121 is a channel pre-allocated to the second processing core 111, a receiving channel 1122 is configured to receive inter-core communication data sent from other SoCs (such as the SoC 10 in FIG. 1B), and the second channel 1121 is coupled to the receiving channel 1122.

During inter-core communication, the first processing core 101 on the SoC 10 generates a communication request, which requests inter-core communication with the second processing core 111 on the SoC 11. Based on the communication request, inter-core communication data is read from the first address space 201 through the first channel 1041 of the MAC 104 on the SoC 10, and is transmitted to the receiving channel 1122 of the MAC 112 on the SoC 11 through the sending channel 1042 of the MAC 104, so that the MAC 112 stores the inter-core communication data transmitted by the receiving channel 1122 into the second address space 202 through the second channel 1121.

In this embodiment of this disclosure, the second address space 202 and the first address space 201 are different address spaces in the memory 20, so that the address spaces accessed by the first processing core 101 and the second processing core 111 are independent of each other. In this way, mutual influence between a plurality of processing cores may be avoided, which can improve security and stability of communication. Moreover, parallel communication can be performed by using a plurality of channels of the MAC 104 and the MAC 112, so that high-speed transmission of a large amount of data can be implemented, thereby improving high efficiency and flexibility of the inter-core communication.

In some embodiments, after the inter-core communication data is transmitted to the second address space 202, the MAC 112 may generate an interrupt message and send the same to the second processing core 111 through the second channel 1121 of the MAC 112. The second processing core 111 reads the inter-core communication data from the second address space 202 based on the interrupt message, and processes the inter-core communication data.

In some embodiments, a first virtual machine (VM) VM1 may run on the first processing core 101, and a second virtual machine VM2 may run on the second processing core 111. The first address space 201 corresponding to the first processing core 101 and the second address space 202 corresponding to the second processing core 111 are different. Thus, during multi-core communication, it can be ensured that address spaces accessed by the VM1 and the VM2 are independent of each other, thereby avoiding impact of abnormalities of one VM on other VMs. In this case, the other VMs operate stably, thereby improving reliability and stability of an entire system.

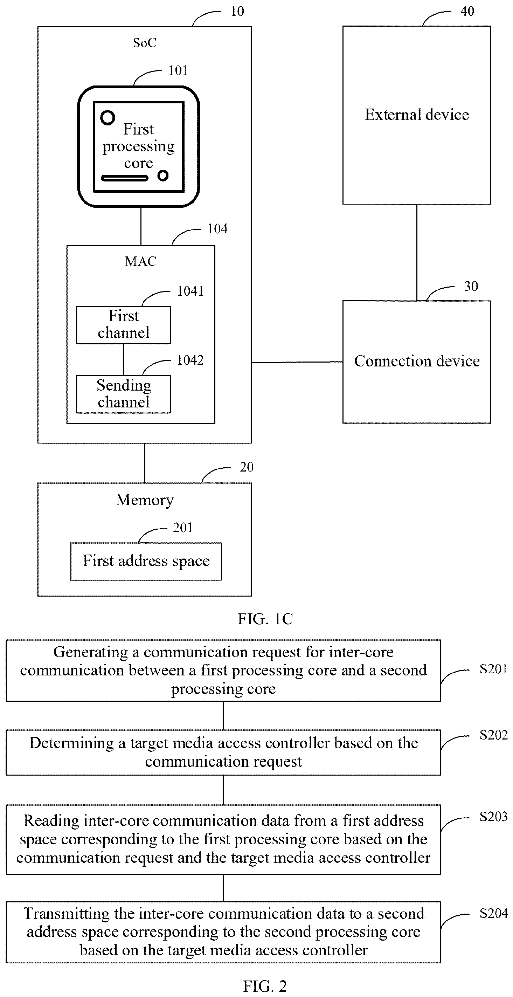

FIG. 1C is a schematic diagram of a scenario in which a processing core communicates with an external device according to an exemplary embodiment of this disclosure. As shown in FIG. 1C, a system-on-chip SoC 10 includes a processing core 101 and a media access controller (MAC) 104 that are used for communication. The MAC 104 is used for communication between the processing core and an external device, and includes a plurality of channels (which are not all shown in FIG. 1C). The first channel 1041 is a channel pre-allocated to the first processing core 101, and the sending channel 1042 is configured to send communication data.

A memory 20 includes a first address space 201, which is an address space pre-allocated to the first processing core 101.

An external device 40 may be a controller, a decoder, an external processor, or other devices, to execute a corresponding processing task based on the communication data sent by the first processing core 101.

A connection device 30 is configured to connect the SoC 10 and the external device 40. For example, the connection device 30 may be a port physical layer (PHY) or a switch. The sending channel 1042 of the MAC 104 may be coupled to the PHY or the switch, so that the communication data may be transmitted to the external device 30 through the PHY or the switch.

During communication, the first processing core 101 on the SoC 10 generates a communication request, which requests communication with the external device 30. Based on the communication request, the communication data is read from the first address space 201 through the first channel 1041 of the MAC 104 on the SoC 10, and is transmitted to the connection device 30 through the sending channel 1042 of the MAC 104. The connection device 30 transmits the communication data to the external device 40, so that the external device 40 processes the received communication data.

In the embodiments of this disclosure, the SOC 10 may perform parallel transmission of the communication data by using a plurality of channels of the MAC 104, so that high-speed transmission of a large amount of data can be implemented, thereby improving high efficiency and flexibility of the inter-core communication.

### Exemplary method

FIG. 2 is a schematic flowchart of an inter-core communication method for a system-on-chip according to an exemplary embodiment of this disclosure. The inter-core communication method may be implemented by an inter-core communication apparatus on the SoC. As shown in FIG. 2, the inter-core communication method includes the following steps.

Step S201: Generating a communication request for inter-core communication between a first processing core and a second processing core.

The first processing core on the SoC generates the communication request, which requests the inter-core communication with the second processing core. The second processing core may be located on a same SoC or on a different SoC as the first processing core. When the first processing core and the second processing core are located on a same SoC, the communication request is an on-chip communication request. When the first processing core and the second processing core are located on different SoCs, the communication request is an inter-chip communication request.

In this embodiment of this disclosure, the communication request carries at least an identifier of the first processing core and an identifier of the second processing core.

Step S202: Determining a target media access controller based on the communication request.

A plurality of media access controllers MACs may be disposed on the SoC, and different MACs can implement different functions. For example, a MAC 103 shown in FIG. 1A can implement on-chip multi-core communication, while a MAC 104 shown in FIG. 1B can implement inter-chip multi-core communication. In combination with the communication request generated by the first processing core, one is selected from the plurality of MACs as the target MAC. For example, when the communication request is an on-chip communication request, the MAC 103 is used as the target MAC. When the communication request is an inter-chip communication request, the MAC 104 is used as the target MAC.

Step S203: Reading inter-core communication data from a first address space corresponding to the first processing core based on the communication request and the target media access controller.

The first address space is pre-allocate to the first processing core in a memory. The target MAC determines, based on the communication request, an access address for accessing the first address space, and reads the to-be-transmitted inter-core communication data based on the access address.

Step S204: Transmitting the inter-core communication data to a second address space corresponding to the second processing core based on the target media access controller.

After reading the inter-core communication data, the target MAC transmits the inter-core communication data to the second address space allocated to the second processing core, so that the second processing core reads the inter-core communication data from the second address space for processing.

In this embodiment of this disclosure, the first address space and the second address space correspond to different address spaces in the memory. For example, the first processing core performs reading and writing on an address space of 0-2G in the memory, while the second processing core performs reading and writing on an address space of 2-4G in the memory. Because the first processing core and the second processing core perform reading and writing on different address spaces, the address spaces accessed by the first processing core and the second processing core are independent of each other. In this way, mutual influence between a plurality of processing cores may be avoided, which can improve security and stability of communication. The first processing core and the second processing core perform inter-core communication through the MAC, and high-speed transmission of a large amount of data can be implemented based on parallel communication of a plurality of channels, thereby improving high efficiency and flexibility of the inter-core communication.

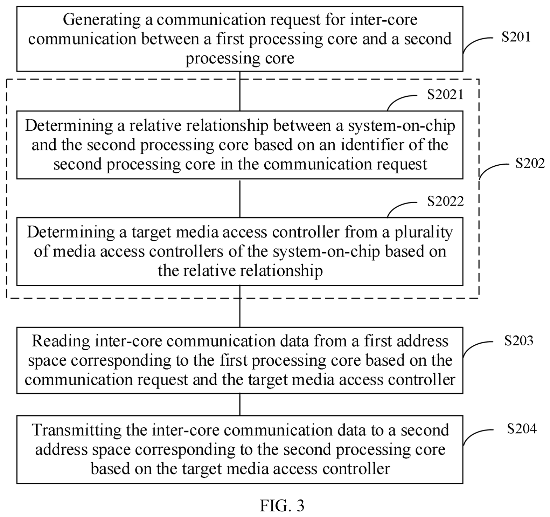

As shown in FIG. 3, on the basis of the embodiment shown in FIG. 2, step S202 of "determining a target media access controller based on the communication request" may include steps S2021 and S2022.

Step S2021: Determining a relative relationship between the system-on-chip and the second processing core based on an identifier of the second processing core in the communication request.

The first processing core may generate the communication request according to the identifier of the first processing core, the identifier of the second processing core for communication, and a virtual address corresponding to to-be-transmitted data. The inter-core communication apparatus determines whether the second processing core is located on a same SoC as the first processing core according to the identifier of the second processing core in the communication request. When the second processing core and the first processing core are located on a same SoC (as shown in FIG. 1A), the relative relationship is determined to be that the second processing core is on the SoC. When the second processing core and the first processing core are located on different SoCs (as shown in FIG. 1B), the relative relationship is determined to be that the second processing core is not on the SoC. It should be noted that the SoC herein particularly refers to a SoC where the first processing core is located. That the second processing core is not on the SoC indicates that the second processing core is not on the SoC where the first processing core is located, but is on another SoC.

Step S2022: Determining the target media access controller from a plurality of media access controllers of the system-on-chip based on the relative relationship.

In this embodiment of this disclosure, different target MACs are determined based on different relative relationships. Various modes of inter-core communication such as on-chip multi-core communication and inter-chip multi-core communication can be implemented by using different MACs, thereby improving the flexibility of the inter-core communication.

In some embodiments, when the relative relationship indicates that the second processing core is on the system-on-chip, the target MAC may be determined according to the following steps.

Step S20221: In response to the relative relationship indicating that the second processing core is on the system-on-chip, determining that a type of the communication request is an on-chip communication type.

When the first processing core and the second processing core are located on a same SoC, it is determined that the communication request is an on-chip communication request. In this case, the type of the communication request is the on-chip communication type, that is, a multi-core communication scenario shown in FIG. 1A.

Step S20222: Selecting a media access controller used for on-chip communication from the plurality of media access controllers of the system-on-chip as the target media access controller.

A plurality of MACs may be disposed on the SoC, and different MACs implement different functions. When on-chip multi-core communication is required, the MAC used for on-chip communication (such as the MAC 103 shown in FIG. 1A) is selected from the plurality of MACs as the target MAC.

In some embodiments, when the relative relationship indicates that the second processing core is not on the system-on-chip, the target MAC may be determined according to the following steps.

Step S20223: In response to the relative relationship indicating that the second processing core is not on the system-on-chip, determining that a type of the communication request is an inter-chip communication type.

When the first processing core and the second processing core are located on different SoCs, it is determined that the communication request is an inter-chip communication request. In this case, the type of the communication request is the inter-chip communication type, that is, a multi-core communication scenario shown in FIG. 1B.

Step S20224: Selecting a media access controller used for inter-chip communication from the plurality of media access controllers of the system-on-chip as the target media access controller.

A plurality of MACs may be disposed on the SoC, and different MACs implement different functions. When inter-chip multi-core communication is required, the MAC used for inter-chip communication (such as the MAC 104 shown in FIG. 1B) is selected from the plurality of MACs as the target MAC.

According to the method provided in the embodiments of this disclosure, the communication type is determined based on the relative relationship between the system-on-chip and the second processing core, and the corresponding target MAC is determined based on the communication type. Thus, adaptive determining of the target MAC can be achieved.

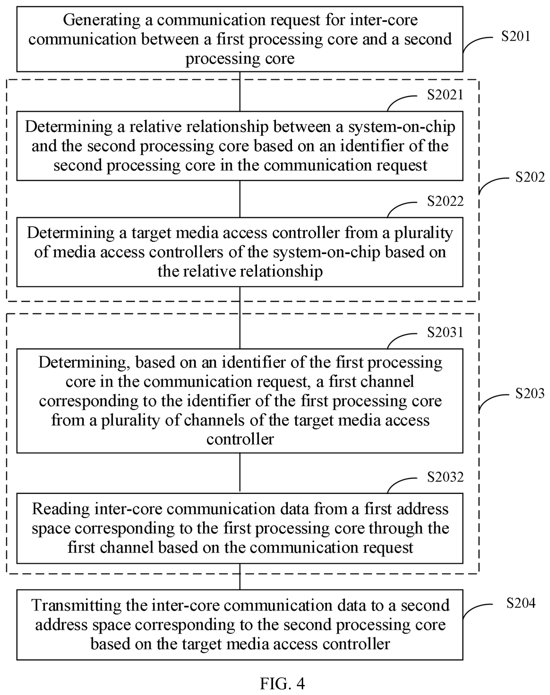

As shown in FIG. 4, on the basis of the foregoing embodiments, step S203 of "reading inter-core communication data from a first address space corresponding to the first processing core based on the communication request and the target media access controller" may include the following steps S2031 and S2032.

Step S2031: Determining, based on an identifier of the first processing core in the communication request, a first channel corresponding to the identifier of the first processing core from a plurality of channels of the target media access controller.

The inter-core communication apparatus determines a first channel CH1 (a first channel 1031 shown in FIG. 1A) corresponding to the first processing core in the plurality of channels of the target MAC according to the identifier of the first processing core in the communication request. This CH1 is a channel pre-allocated to the first processing core, and data transmission between the first processing core and the target MAC is implemented through the CH1.

Step S2032: Reading the inter-core communication data from the first address space corresponding to the first processing core through the first channel based on the communication request.

After the inter-core communication apparatus determines that the channel pre-allocated to the first processing core in the target MAC is the first channel, the target MAC receives the communication request through the first channel, and reads the inter-core communication data from the first address space corresponding to the first processing core based on the communication request.

According to the method provided in the embodiments of this disclosure, data is read from the memory through the MAC, and the plurality of channels of the MAC can perform parallel communication. Therefore, high-speed reading of a large amount of data can be implemented, thereby improving efficiency of inter-core communication.

In practical application, since a processor uses a virtual address to perform reading and writing on the memory, that is, an access address carried in the communication request is a virtual address, the first channel can read the inter-core communication data from the first address space merely after this virtual address is mapped to a physical address.

In an implementation, the target MAC may read the inter-core communication data from the first address space by using a system memory management unit (SMMU) on the SoC. In the embodiments of this disclosure, the SMMU is a hardware device that can provide direct memory access (DMA) address translation and memory isolation functions, allowing particular devices to perform DMA transactions in particular memory areas while cannot access memory address spaces except the particular memory areas.

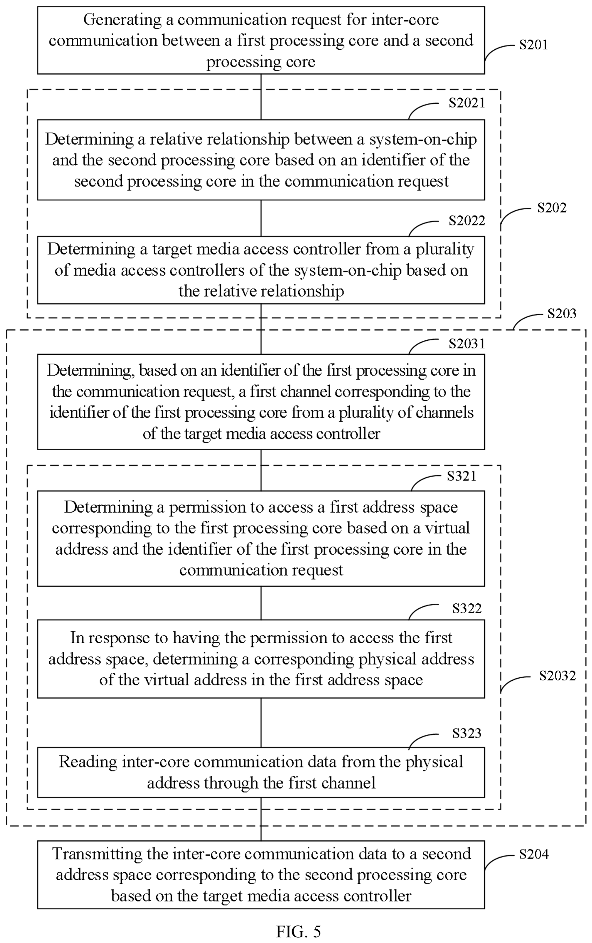

As shown in FIG. 5, on the basis of the foregoing embodiments, step S2032 of "reading the inter-core communication data from the first address space corresponding to the first processing core through the first channel based on the communication request" may include the following steps S321 to S323.

Step S321: Determining a permission to access the first address space corresponding to the first processing core based on a virtual address and the identifier of the first processing core in the communication request.

The MAC transmits the virtual address and the identifier of the first processing core that are carried in the communication request to the SMMU through the first channel. The SMMU determines whether there is an access permission according to the identifier of the first processing core and the virtual address. In an implementation, the SMMU may determine the access permission according to the following steps.

Step S3211: Determining a target address mapping table corresponding to the identifier of the first processing core from a plurality of preset address mapping tables.

Virtual address spaces are pre-allocated to the processing cores, and correspondences between the virtual address spaces of the processing cores and a physical address space in the memory are specified. The correspondences are stored in the SMMU by means of an address mapping table.

After receiving the virtual address and the identifier of the first processing core that are sent by the first channel, the SMMU first searches for an address mapping table corresponding to the first processing core in the plurality of address mapping tables according to the identifier of the first processing core. If the search is successful, the found address mapping table is determined as the target address mapping table, which includes the correspondence between the virtual address space corresponding to the first processing core and the first address space. If the search fails, it indicates that no address mapping table is pre-established to the first processing core in the SMMU. In this case, the first processing core does not have an access permission to the memory and cannot read the to-be-transmitted inter-core communication data, resulting in failed inter-core communication between the first processing core and the second processing core.

After the target address mapping table is found, it is determined whether the virtual address is within a virtual address space range of the target address mapping table, that is, it is determined whether the virtual address space contains the virtual address. If the virtual address space contains the virtual address, it indicates that the to-be-accessed virtual address is within a range of the first address space corresponding to the first processing core. In this case, step S3212 is executed. If the virtual address space does not contain the virtual address, it indicates that the to-be-accessed virtual address is not within the range of the first address space corresponding to the first processing core. In this case, step S3213 is executed.

Step S3212: In response to that the virtual address space contains the virtual address, determining that there is the permission to access the first address space corresponding to the first processing core.

When it is determined that the first processing core has the permission to access the first address space, step S322 is executed.

Step S3213: In response to that the virtual address space does not contain the virtual address, determining that there is no permission to access the first address space corresponding to the first processing core.

When it is determined that the first processing core does not have the permission to access the first address space, the first processing core cannot read the to-be-transmitted inter-core communication data, and the inter-core communication between the first processing core and the second processing core fails.

Step S322: In response to having the permission to access the first address space, determining a corresponding physical address of the virtual address in the first address space.

Since a virtual address is generated by the first processing core while there is a physical address in the memory, after it is determined that the first processing core has the permission to access the first address space, the SMMU performs address translation on the virtual address based on the target address mapping table to obtain the physical address. Data stored in this physical address is the inter-core communication data.

Step S323: Reading the inter-core communication data from the physical address through the first channel.

The first channel of the MAC reads the inter-core communication data from the physical address by using the SMMU, and then the MAC may store the read inter-core communication data into a first buffer corresponding to the first channel.

According to the method provided in the embodiments of this disclosure, the inter-core communication data can only be successfully only under the premise that the permission to access the first address space is determined based on the virtual address in the communication request. In this way, hard isolation between the processing core and the memory can be implemented, thereby improving security of communication. Moreover, a first processor can only access the first address space and cannot access other address spaces in the memory, so that isolation of memory access between the processing cores can be achieved. In this way, a plurality of processing cores may be prevented from performing data reading and writing on a same physical address, which can improve stability of communication.

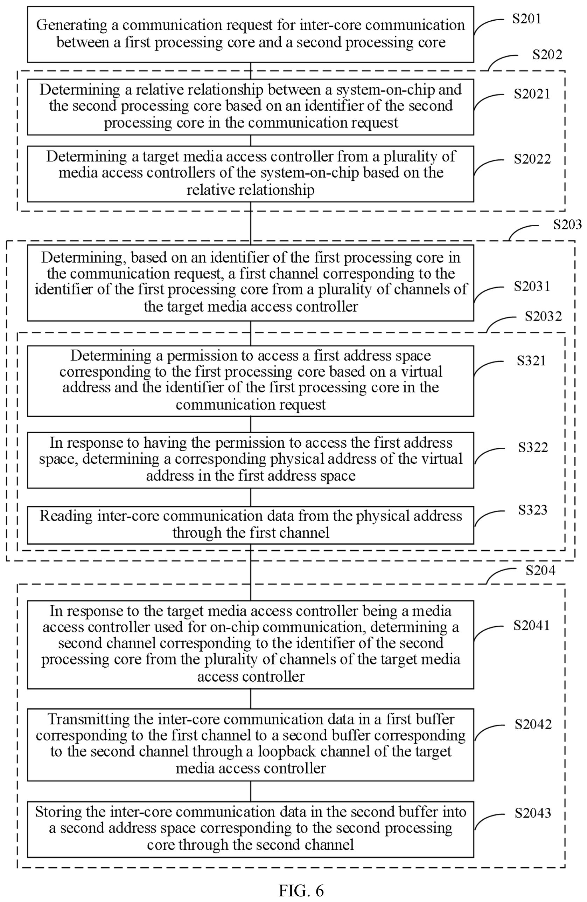

As shown in FIG. 6, on the basis of the foregoing embodiments, step S204 of "transmitting the inter-core communication data to a second address space corresponding to the second processing core based on the target media access controller" may include the following steps S2041 to S2043.

Step S2041: In response to the target media access controller being a media access controller used for on-chip communication, determining a second channel corresponding to the identifier of the second processing core from the plurality of channels of the target media access controller.

When the target MAC is a MAC used for on-chip communication (the MAC 103 shown FIG. 1A), the inter-core communication apparatus determines a second channel CH2 (a second channel 1032 shown in FIG. 1A) corresponding to the second processing core in a plurality of channels of the MAC 103 according to the identifier of the second processing core in the communication request. The CH2 is a channel pre-allocated to the second processing core, and data transmission between the second processing core and a MAC1 is implemented through the CH2.

Step S2042: Transmitting the inter-core communication data in a first buffer corresponding to the first channel to a second buffer corresponding to the second channel based on a loopback channel of the target media access controller.

During on-chip multi-core communication, the loopback channel used for on-chip multi-core communication in the plurality of channels of the MAC 103 may be used for data transmission. The loopback channel generally refers to a physical connection between a sending channel and a receiving channel, so that all data sent through the loopback channel can be received by the loopback channel.

The CH1 transmits the inter-core communication data in the first buffer to a transmit queue (TX) of the loopback channel. Based on self transmitting and receiving characteristics of the loopback channel, the inter-core communication data enters a receiving queue (RX) of the loopback channel from the transmit queue of the loopback channel, and then the inter-core communication data in the receiving queue is transmitted to the second buffer through the loopback channel. The second buffer is a buffer space corresponding to the CH2.

Step S2043: Storing the inter-core communication data in the second buffer into the second address space corresponding to the second processing core through the second channel.

Since the second address space and the CH2 haven been pre-allocated to the second processing core, after the inter-core communication data is received by the CH2, it may be learned that this data is to be transmitted to the second processing core. Therefore, the inter-core communication data in the second buffer corresponding to the CH2 is stored into the second address space corresponding to the second processing core.

According to the method provided in the embodiments of this disclosure, during on-chip multi-core communication, the loopback channel of the MAC 103 may be used for data transmission, which can reduce communication latencies and improve communication reliability.

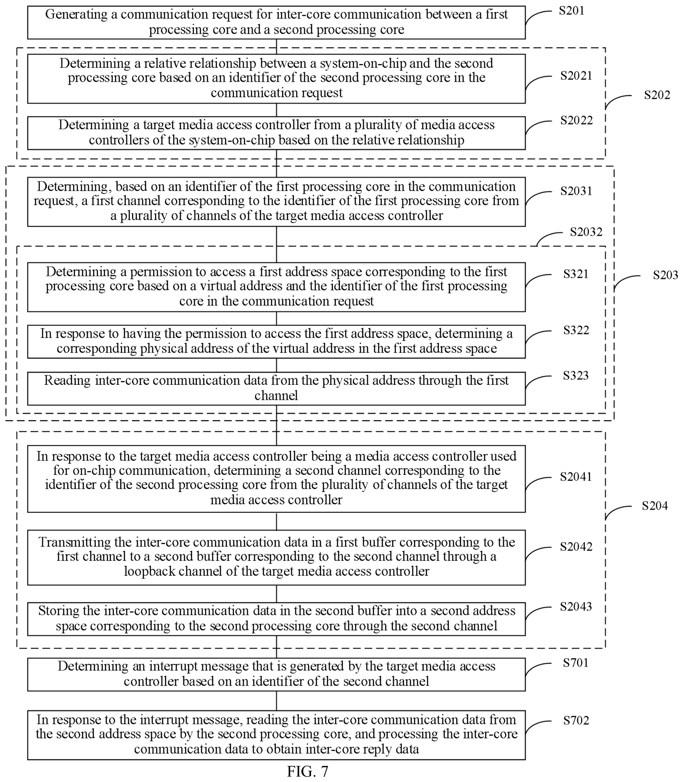

On the basis of the foregoing embodiments, this disclosure provides another inter-core communication method for a system-on-chip. FIG. 7 is a schematic flowchart of an inter-core communication method for a system-on-chip according to a further exemplary embodiment of this disclosure. As shown in FIG. 7, the inter-core communication method includes the following steps.

Step S701: Determining an interrupt message that is generated by the target media access controller based on an identifier of the second channel.

The CH2 of the MAC 103 generates the interrupt message after storing the inter-core communication data into the second address space corresponding to the second processing core. The interrupt message is used to trigger the second processing core to process the inter-core communication data.

Step S702: In response to the interrupt message, reading the inter-core communication data from the second address space by the second processing core, and processing the inter-core communication data to obtain inter-core reply data.

After receiving the interrupt message sent by the CH2, the second processing core parses the interrupt message to obtain the identifier of the second channel. A storage address may be determined according to the identifier of the second channel. Subsequently, the second processing core reads the inter-core communication data from the second address space based on this storage address, and processes the inter-core communication data.

In an example, the second processing core processing the inter-core communication data may be that the second processing core continues to send the inter-core communication data to another processing core on the chip or to an external electronic device (such as a computer, a server, or another terminal device), and the other processing core on the chip or the external electronic device computes the inter-core communication data to obtain a computation result. In another example, the second processing core processing the inter-core communication data may be that the second processing core computes the inter-core communication data to obtain a computation result.

In the embodiments of this disclosure, the second processing core may determine the inter-core reply data based on the computation result, and store the inter-core reply data into the second address space, thus transmitting and processing inter-core reply data. The second address space for the second processing core to store the inter-core reply data and the first address space for the first processing core to read the inter-core communication data correspond to different address spaces in the memory, so that the first processing core and the second processing core can read and write independently. Thus, security and stability of communication can be improved.

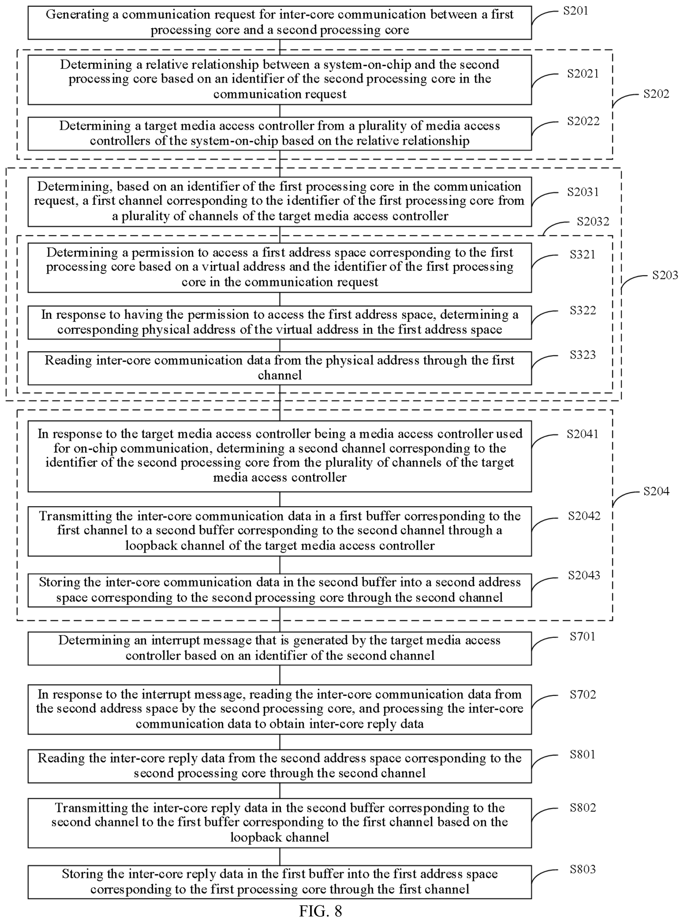

On the basis of the foregoing embodiments, this disclosure provides another inter-core communication method for a system-on-chip. FIG. 8 is a schematic flowchart of an inter-core communication method for a system-on-chip according to a still further exemplary embodiment of this disclosure. As shown in FIG. 8, the inter-core communication method includes the following steps.

Step S801: Reading the inter-core reply data from the second address space corresponding to the second processing core through the second channel.

In a practical application scenario, sometimes it is needed to transmit the inter-core reply data back to the first processing core. In this case, the second processing core generates a communication reply request, which requests inter-core reply communication with the first processing core. As shown in FIG. 1A, the CH2 (that is, the second channel 1032) in the MAC 103 reads the inter-core reply data from the second address space corresponding to the second processing core based on the received communication reply request, and temporarily stores the inter-core reply data in the second buffer.

Step S802: Transmitting the inter-core reply data in the second buffer corresponding to the second channel to the first buffer corresponding to the first channel based on the loopback channel.

The inter-core reply data in the second buffer is transmitted to the first buffer corresponding to the CH1 in the MAC 103 by the loopback channel in the MAC 103.

Step S803: Storing the inter-core reply data in the first buffer into the first address space corresponding to the first processing core through the first channel.

After storing the inter-core reply data into the first address space, the CH1 can generate an interrupt message and send the same to the first processing core. After receiving the interrupt message sent by the CH1, the first processing core reads the inter-core reply data from the first address space.

The method provided by the embodiments of the present disclosure enables bidirectional communication among a plurality of on-chip processing cores, achieving a bidirectional communication service that supports both transmission and reception, and the address spaces accessed by the plurality of processing cores are independent of each other. Thus, security and stability of communication can be improved.

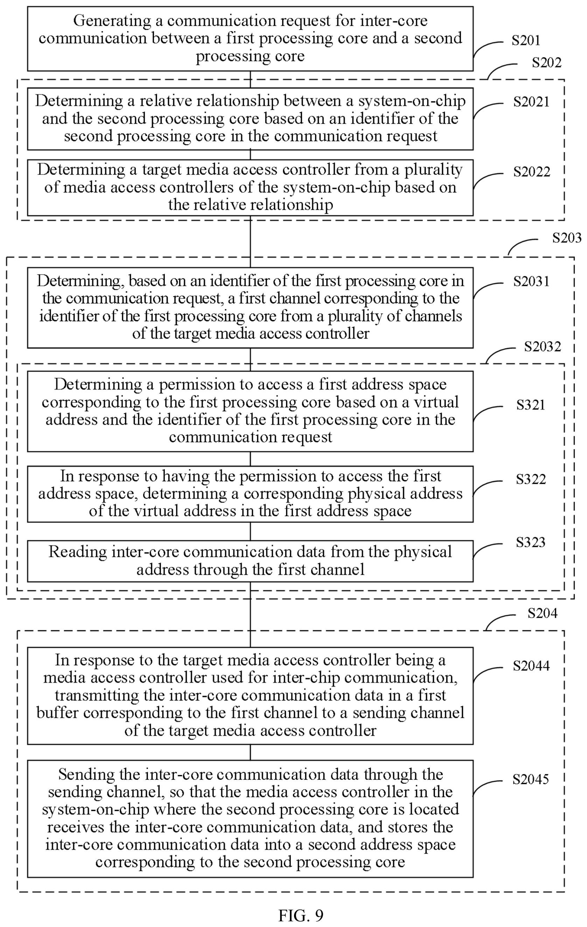

As shown in FIG. 9, on the basis of the foregoing embodiments, step S204 of "transmitting the inter-core communication data to a second address space corresponding to the second processing core based on the target media access controller" may be implemented according to the following steps S2044 and S2045.

Step S2044: In response to the target media access controller being a media access controller used for inter-chip communication, transmitting the inter-core communication data in a first buffer corresponding to the first channel to a sending channel of the target media access controller.

When the target MAC is a MAC used for inter-chip communication (such as the MAC 104 shown in FIG. 1B), the inter-core communication apparatus determines a transmission channel as the sending channel of the MAC 104.

Step S2045: Sending the inter-core communication data through the sending channel, so that the media access controller in the system-on-chip where the second processing core is located receives the inter-core communication data, and stores the inter-core communication data into the second address space corresponding to the second processing core.

The inter-core communication data is sent through the sending channel of the MAC 104 on a SoC 10, so that the media access controller MAC (such as a MAC 112 shown in FIG. 1B) on the system-on-chip where the second processing core is located (such as a SoC 11 shown in FIG. 1B) receives the inter-core communication data, and stores the inter-core communication data into the second address space corresponding to the second processing core. In this way, inter-chip multi-core communication is implemented.

According to the method provided in the embodiments of this disclosure, during the inter-chip multi-core communication, the sending channel of the MAC 104 on the SoC 10 may be used to send the inter-core communication data, so that a receiving channel of the MAC 112 on the SoC 11 receives the inter-core communication data. In this way, the inter-chip multi-core communication is implemented. Parallel communication may be performed by using a plurality of channels of the MAC, so that efficient transmission of a large amount of data can be implemented, thereby improving high efficiency and flexibility of the inter-core communication.

After receiving the inter-core communication data, the receiving channel of the MAC 112 on the SoC 11 transmits the inter-core communication data to the second buffer of the second channel CH2 (such as a second channel 1121 shown in FIG. 1B) of the MAC 112 through the receiving channel. The second channel is pre-allocated to the second processing core. The second channel of the MAC 112 stores the inter-core communication data in the second buffer into the second address space. Subsequently, the MAC 112 generates a second interrupt message, which is used to trigger the second processing core on the SoC 11 to process the inter-core communication data. After receiving the second interrupt message sent by the CH2 of the MAC 112, the second processing core on the SoC 11 parses the second interrupt message to obtain the identifier of the second channel. The second processing core determines the storage address according to the identifier of the second channel, and then reads the inter-core communication data from the second address space based on this storage address, and processes the inter-core communication data to obtain the inter-core reply data.

In some embodiments, the second processing core on the SoC 11 needs to send the inter-core reply data back to the first processing core on the SoC 10. In this case, the following steps are executed: the second processing core on the SoC 11 generates the communication reply request, which is used to request inter-core reply communication with the first processing core on the SoC 10. The CH2 in the MAC 112 reads the inter-core reply data from the second address space based on the received communication reply request, and temporarily stores the inter-core reply data in the second buffer. The sending channel (not shown in FIG. 1B) in the MAC 112 is used to send the inter-core reply data.

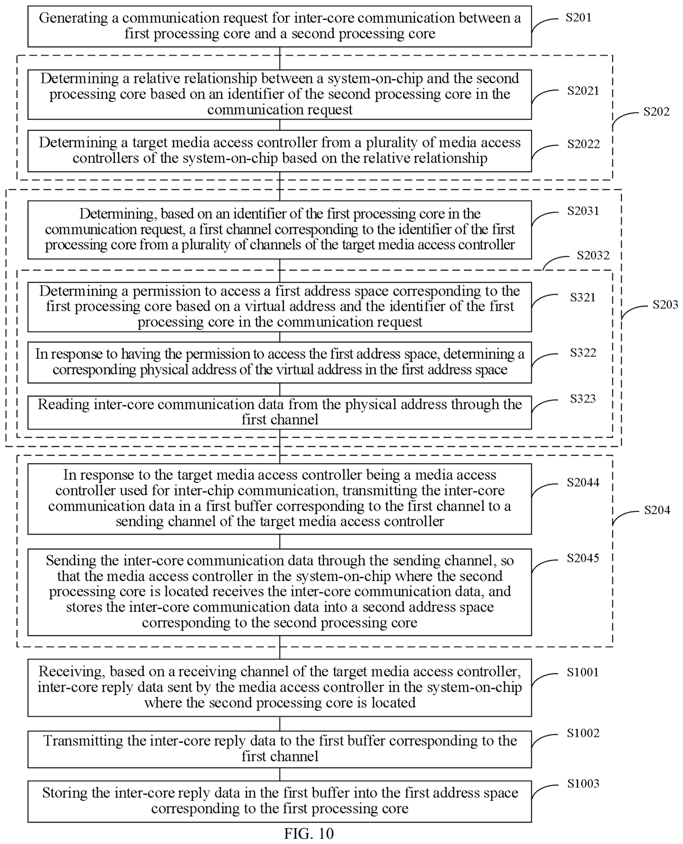

After the inter-core reply data is sent by the sending channel of the MAC 112 on the SoC 11, the MAC 104 on the SoC 10 continues to execute the following steps as shown in FIG. 10.

Step S1001: Receiving, based on a receiving channel of the target media access controller, inter-core reply data sent by the media access controller in the system-on-chip where the second processing core is located.

The receiving channel (not shown in FIG. 1B) of the MAC 104 on the SoC 10 receives the inter-core reply data sent by the sending channel of the MAC 112 on the SoC 11.

Step S1002: Transmitting the inter-core reply data to the first buffer corresponding to the first channel.

The received inter-core reply data is transmitted to the first channel CH1 (such as a first channel 1041 shown in FIG. 1B) of the MAC 104 through the receiving channel of the MAC 104, and then is stored in the first buffer corresponding to the CH1 of the MAC 104 by the CH1.

Step S1003: Storing the inter-core reply data in the first buffer into the first address space corresponding to the first processing core.

Since the first address space and the CH1 haven been pre-allocated to the first processing core, after the inter-core reply data is received by the CH1, it may be learned that this data is to be transmitted to the first processing core. Therefore, the inter-core reply data in the first buffer corresponding to the CH1 is stored into the first address space corresponding to the first processing core.

According to the method provided in the embodiments of this disclosure, during the inter-chip multi-core communication, the receiving channel of the MAC 104 may be used to receive data transmitted from other SoCs. In this way, inter-chip multi-core bi-directional communication is implemented, thereby implementing bi-directional communication services with simultaneous sending and receiving.

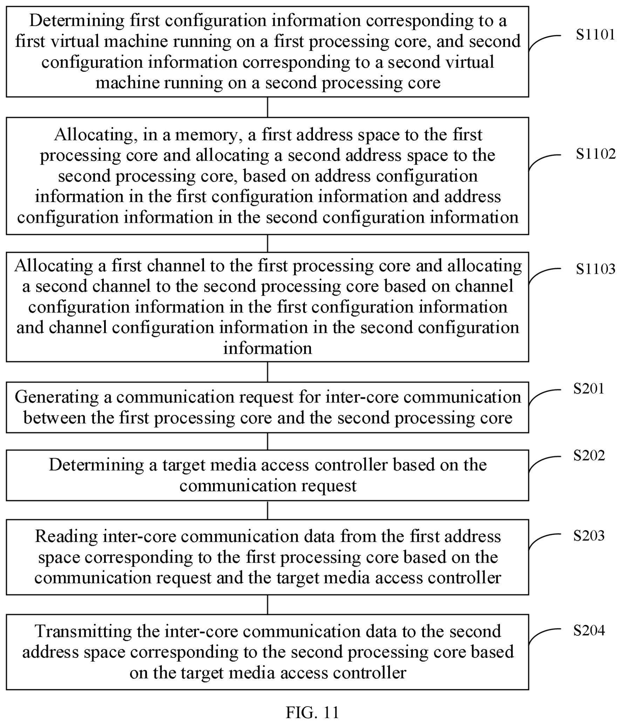

On the basis of the foregoing embodiments, this disclosure provides another inter-core communication method for a system-on-chip. FIG. 11 is a schematic flowchart of an inter-core communication method for a system-on-chip according to even yet another exemplary embodiment of this disclosure. As shown in FIG. 11, the inter-core communication method includes the following steps.

Step S1101: Determining first configuration information corresponding to a first virtual machine running on the first processing core, and second configuration information corresponding to a second virtual machine running on the second processing core.

In this embodiment of this disclosure, a first virtual machine VM1 may run on the first processing core, and a second virtual machine VM2 may run on the second processing core. The VM1 and the VM2 may be managed by a virtual machine monitor (Hypervisor). When being started and executed by the SoC, the Hypervisor obtains the first configuration information corresponding to the VM1 and the second configuration information corresponding to the VM2, so as to allocate resources to the VM1 and the VM2 based on these configuration information.

Step S1102: Allocating, in the memory, the first address space to the first processing core and allocating the second address space to the second processing core, based on address configuration information in the first configuration information and address configuration information in the second configuration information.

Step S1103: Allocating the first channel to the first processing core and allocating a second channel to the second processing core based on channel configuration information in the first configuration information and channel configuration information in the second configuration information.

The resources allocated to the VMs by the hypervisor may include memories and MAC channels. Therefore, the first configuration information and the second configuration information may include the address configuration information and the channel configuration information. The Hypervisor allocates the first address space in the memory and the first channel in the MAC to the VM1 based on the first configuration information, and allocates the second address space in the memory and the second channel in the MAC to the VM2 based on the second configuration information. The VM1 and the VM2 are started based on the address spaces and the channels that are configured by the Hypervisor.

In this embodiment of this disclosure, based on the address configuration information in the configuration information, the first address space is configured to the first processing core running the VM1, and the second address space is configured to the second processing core running the VM2. The first address space and the second address space are different address spaces in the memory, so that the address spaces accessed by the first processing core and the second processing core are independent of each other. In this way, mutual influence between a plurality of processing cores may be avoided, which can improve security and stability of communication. Based on the channel configuration information in the configuration information, different channels in the MAC are allocated to the first processing core and the second processing core. During the multi-core communication, high-speed transmission of a large amount of data can be implemented based on parallel communication of a plurality of channels of the MAC, thereby improving high efficiency and flexibility of the inter-core communication.

### Exemplary apparatus

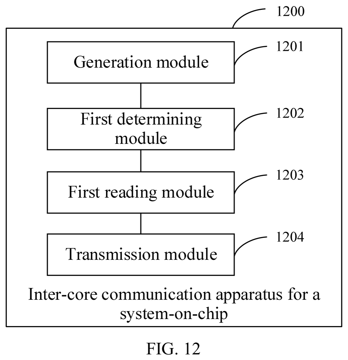

FIG. 12 is a schematic diagram of a structure of an inter-core communication apparatus for a system-on-chip according to an exemplary embodiment of this disclosure. As shown in FIG. 12, an inter-core communication apparatus 1200 for a system-on-chip may include:
a generation module 1201, configured to generate a communication request for inter-core communication between a first processing core and a second processing core;
a first determining module 1202, configured to determine a target media access controller based on the communication request generated by the generation module 1201;
a first reading module 1203, configured to read inter-core communication data from a first address space corresponding to the first processing core based on the communication request generated by the generation module 1201 and the target media access controller determined by the first determining module 1202; and
a transmission module 1204, configured to transmit the inter-core communication data read by the first reading module 1203 to a second address space corresponding to the second processing core based on the target media access controller determined by the first determining module 1202, wherein the first address space and the second address space correspond to different address spaces in a memory.

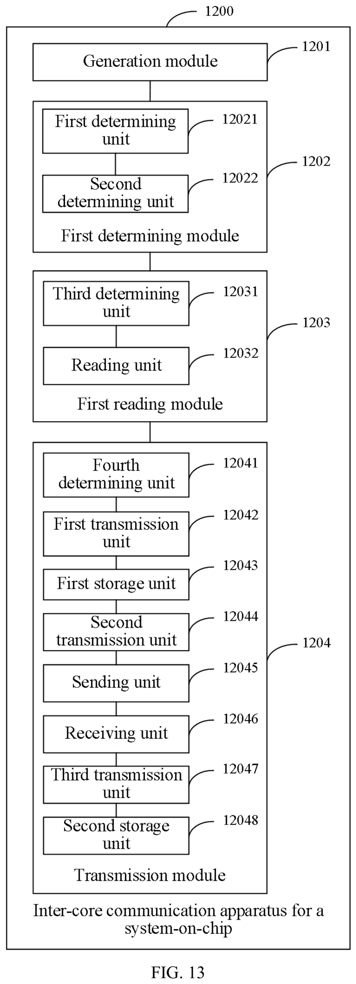

As shown in FIG. 13, on the basis of the embodiment shown in FIG. 12, the first determining module 1202 may include:
a first determining unit 12021, configured to determine a relative relationship between the system-on-chip and the second processing core based on an identifier of the second processing core in the communication request; and
a second determining unit 12022, configured to determine the target media access controller from a plurality of media access controllers of the system-on-chip based on the relative relationship.

In some embodiments, the second determining unit 12022 may include:
a first determining subunit, configured to: in response to the relative relationship indicating that the second processing core is on the system-on-chip, determine that a type of the communication request is an on-chip communication type; and
a selection subunit, configured to select a media access controller used for on-chip communication from the plurality of media access controllers of the system-on-chip as the target media access controller.

In some embodiments, the first determining subunit is further configured to: in response to the relative relationship indicating that the second processing core is not on the system-on-chip, determine that a type of the communication request is an inter-chip communication type.

The selection subunit is further configured to select a media access controller used for inter-chip communication from the plurality of media access controllers of the system-on-chip as the target media access controller.

In some embodiments, the first reading module 1203 may include:
a third determining unit 12031, configured to determine, based on an identifier of the first processing core in the communication request, a first channel corresponding to the identifier of the first processing core from a plurality of channels of the target media access controller; and
a reading unit 12032, configured to read the inter-core communication data from the first address space corresponding to the first processing core through the first channel based on the communication request.

In some embodiments, the reading unit 12032 may include:
a second determining subunit, configured to determine a permission to access the first address space corresponding to the first processing core based on a virtual address and the identifier of the first processing core in the communication request;
a third determining subunit, configured to: in response to having the permission to access the first address space, determine a corresponding physical address of the virtual address in the first address space; and
a reading subunit, configured to read the inter-core communication data from the physical address through the first channel.

In some embodiments, the third determining subunit is further configured to: determine a target address mapping table corresponding to the identifier of the first processing core from a plurality of preset address mapping tables, wherein the target address mapping table includes a correspondence between a virtual address space corresponding to the first processing core and the first address space; and in response to that the virtual address space contains the virtual address, determine that the first processing core has the permission to access the first address space corresponding to the first processing core.

In some embodiments, the transmission module 1204 may include:
a fourth determining unit 12041, configured to: in response to the target media access controller being a media access controller used for on-chip communication, determine a second channel corresponding to the identifier of the second processing core from the plurality of channels of the target media access controller;
a first transmission unit 12042, configured to transmit the inter-core communication data in a first buffer corresponding to the first channel to a second buffer corresponding to the second channel based on a loopback channel of the target media access controller; and
a first storage unit 12043, configured to store the inter-core communication data in the second buffer into the second address space corresponding to the second processing core through the second channel.

In some embodiments, the inter-core communication apparatus 1200 for a system-on-chip may further include:
a second determining module, configured to determine an interrupt message that is generated by the target media access controller based on an identifier of the second channel; and
a second reading module, configured to: in response to the interrupt message, read the inter-core communication data from the second address space by the second processing core, and process the inter-core communication data to obtain inter-core reply data.

In some embodiments, the transmission module 1204 may include:
a second transmission unit 12044, configured to: in response to the target media access controller being a media access controller used for inter-chip communication, transmit the inter-core communication data in a first buffer corresponding to the first channel to a sending channel of the target media access controller; and
a sending unit 12045, configured to send the inter-core communication data through the sending channel, so that the media access controller in the system-on-chip where the second processing core is located receives the inter-core communication data, and stores the inter-core communication data into the second address space corresponding to the second processing core.

In some embodiments, the transmission module 1204 may include:
a receiving unit 12046, configured to receive, based on a receiving channel of the target media access controller, inter-core reply data sent by the media access controller in the system-on-chip where the second processing core is located;
a third transmission unit 12047, configured to transmit the inter-core reply data to the first buffer corresponding to the first channel; and
a second storage unit 12048, configured to store the inter-core reply data in the first buffer into the first address space corresponding to the first processing core.

In some embodiments, the inter-core communication apparatus 1200 for a system-on-chip may further include:
a third determining module, configured to determine first configuration information corresponding to a first virtual machine running on the first processing core, and second configuration information corresponding to a second virtual machine running on the second processing core;
a first allocation module, configured to allocate, in the memory, the first address space to the first processing core and allocate the second address space to the second processing core, based on address configuration information in the first configuration information and address configuration information in the second configuration information; and
a second allocation module, configured to allocate the first channel to the first processing core and allocate a second channel to the second processing core based on channel configuration information in the first configuration information and channel configuration information in the second configuration information.

For beneficial technical effects corresponding to the exemplary embodiments of the apparatus in this disclosure, reference may be made to the corresponding beneficial technical effects in the section of exemplary method described above, and details are not described herein again.

### Exemplary electronic device

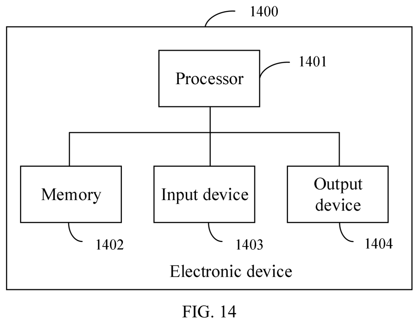

FIG. 14 is a schematic diagram of a compositional structure of an electronic device according to an exemplary embodiment of this disclosure. As shown in FIG. 14, an electronic device 1400 includes at least one processor 1401 and a memory 1402.

The processor 1401 may be a central processing unit (CPU) or another form of processing unit having a data processing capability and/or an instruction execution capability, and may control other components in the electronic device 1400 to implement desired functions.

The memory 1402 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1401 may execute the one or more program instructions to implement the inter-core communication method for a system-on-chip according to various embodiments of this disclosure that are described above and/or other desired functions.

In an example, the electronic device 1400 may further include an input device 1403 and an output device 1404. These components are connected to each other through a bus system and/or another form of connection mechanism (not shown).

The input device 1403 may further include, for example, a keyboard and a mouse.

The output device 1404 may output various information to the outside, and may include, for example, a display, a speaker, a printer, a communication network, and a remote output device connected to the communication network.

Certainly, for simplicity, FIG. 14 shows only some of components in the electronic device 1400 that are related to this disclosure, and components such as a bus and an input/output interface are omitted. In addition, according to specific application situations, the electronic device 1400 may further include any other appropriate components.

### Exemplary computer program product and computer readable storage medium

In addition to the foregoing method and device, embodiments of this disclosure may further provide a computer program product, which includes computer program instructions. When the computer program instructions are run by a processor, the processor is enabled to perform the steps of the plug-in processing method for a neural network model or the data processing method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further provide a computer readable storage medium, which stores computer program instructions. When the computer program instructions are run by the processor, the processor is enabled to perform the steps of the plug-in processing method for a neural network model or the data processing method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM), a flash memory, an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for the embodiments of this disclosure. In addition, specific details described above are merely for examples and for ease of understanding, rather than limitations. The details described above do not limit that this disclosure must be implemented by using the foregoing specific details.

The various embodiments in this specification are all described in a progressive way, and each embodiment focuses on a difference from other embodiments. For same or similar parts among the various embodiments, reference may be made to each other. The system embodiments basically correspond to the method embodiments, and thus are relatively simply described. For related parts, reference may be made to a part of the descriptions of the method embodiments.

The block diagrams of the equipment, the apparatus, the device, and the system involved in this disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and can be used interchangeably with "including but not limited to". The terms "or" and "and" used herein refer to the term "and/or", and can be used interchangeably with "and/or", unless the context clearly indicates otherwise. The term "such as" used herein refers to the phrase "such as but not limited to", and can be used interchangeably with "such as but not limited to".

The method and the apparatus in this disclosure may be implemented in many manners. For example, the method and the apparatus in this disclosure may be implemented by software, hardware, firmware, or any combination of the software, the hardware, and the firmware. The foregoing sequence of the steps of the method is for illustration only, and the steps of the method in this disclosure are not limited to the sequence specifically described above, unless otherwise specifically stated in any other manners. In addition, in some embodiments, the present disclosure may also be implemented as programs recorded in a recording medium. These programs include machine-readable instructions for implementing the method according to the present disclosure. Therefore, the present disclosure further relates to a recording medium storing a program for implementing the method according to the present disclosure.

It should be further pointed out that, various components or various steps in the apparatus, the device, and the methods of this disclosure may be disassembled and/or recombined. These disassembling and/or recombinations shall be regarded as equivalent solutions of this disclosure.

The foregoing description about the disclosed aspects is provided, so that this disclosure can be arrived at or carried out by any person skilled in the art. Various modifications to these aspects are very obvious to a person skilled in the art. Moreover, general principles defined herein may be applicable to other aspects without departing from the scope of this disclosure. Therefore, this disclosure is not intended to be limited to the aspects illustrated herein, but to the widest scope consistent with the principles and novel features disclosed herein.

The foregoing descriptions are given for illustration and description. In addition, the description is not intended to limit the embodiments of this disclosure to forms disclosed herein. Although a plurality of exemplary aspects and embodiments have been discussed above, a person skilled in the art may recognize certain variations, modifications, changes, additions, and sub-combinations thereof.

## Claims

1. An inter-core communication method for a system-on-chip, comprising:
generating a communication request for inter-core communication between a first processing core and a second processing core;
determining a target media access controller based on the communication request;
reading inter-core communication data from a first address space corresponding to the first processing core based on the communication request and the target media access controller; and
transmitting the inter-core communication data to a second address space corresponding to the second processing core based on the target media access controller, wherein the first address space and the second address space correspond to different address spaces in a memory.

2. The method according to claim 1, wherein the determining a target media access controller based on the communication request comprises:
determining a relative relationship between the system-on-chip and the second processing core based on an identifier of the second processing core in the communication request; and
determining the target media access controller from a plurality of media access controllers of the system-on-chip based on the relative relationship.

3. The method according to claim 2, wherein the determining the target media access controller from a plurality of media access controllers of the system-on-chip based on the relative relationship comprises:
in response to the relative relationship indicating that the second processing core is on the system-on-chip, determining that a type of the communication request is an on-chip communication type; and
selecting a media access controller used for on-chip communication from the plurality of media access controllers of the system-on-chip as the target media access controller.

4. The method according to claim 2, wherein the determining the target media access controller from a plurality of media access controllers of the system-on-chip based on the relative relationship comprises:
in response to the relative relationship indicating that the second processing core is not on the system-on-chip, determining that a type of the communication request is an inter-chip communication type; and
selecting a media access controller used for inter-chip communication from the plurality of media access controllers of the system-on-chip as the target media access controller.

5. The method according to claim 1, wherein the reading inter-core communication data from a first address space corresponding to the first processing core based on the communication request and the target media access controller comprises:
determining, based on an identifier of the first processing core in the communication request, a first channel corresponding to the identifier of the first processing core from a plurality of channels of the target media access controller; and
reading the inter-core communication data from the first address space corresponding to the first processing core through the first channel based on the communication request.

6. The method according to claim 5, wherein the reading the inter-core communication data from the first address space corresponding to the first processing core through the first channel based on the communication request comprises:
determining a permission to access the first address space corresponding to the first processing core based on a virtual address and the identifier of the first processing core in the communication request;
in response to having the permission to access the first address space, determining a corresponding physical address of the virtual address in the first address space; and
reading the inter-core communication data from the physical address through the first channel.

7. The method according to claim 6, wherein the determining a permission to access the first address space corresponding to the first processing core based on a virtual address and the identifier of the first processing core in the communication request comprises:
determining a target address mapping table corresponding to the identifier of the first processing core from a plurality of preset address mapping tables, wherein the target address mapping table comprises a correspondence between a virtual address space corresponding to the first processing core and the first address space; and
in response to that the virtual address space contains the virtual address, determining that there is the permission to access the first address space corresponding to the first processing core.

8. The method according to any one of claims 1 to 7, wherein the transmitting the inter-core communication data to a second address space corresponding to the second processing core based on the target media access controller comprises:
in response to the target media access controller being a media access controller used for on-chip communication, determining a second channel corresponding to the identifier of the second processing core from the plurality of channels of the target media access controller;
transmitting the inter-core communication data in a first buffer corresponding to the first channel to a second buffer corresponding to the second channel through a loopback channel of the target media access controller; and
storing the inter-core communication data in the second buffer into the second address space corresponding to the second processing core through the second channel.

9. The method according to claim 8, further comprising:
determining an interrupt message that is generated by the target media access controller based on an identifier of the second channel; and
in response to the interrupt message, reading the inter-core communication data from the second address space by the second processing core, and processing the inter-core communication data to obtain inter-core reply data.

10. The method according to any one of claims 1 to 7, wherein the transmitting the inter-core communication data to a second address space corresponding to the second processing core based on the target media access controller comprises:
in response to the target media access controller being a media access controller used for inter-chip communication, transmitting the inter-core communication data in a first buffer corresponding to the first channel to a sending channel of the target media access controller; and
sending the inter-core communication data through the sending channel, so that the media access controller in the system-on-chip where the second processing core is located receives the inter-core communication data, and stores the inter-core communication data into the second address space corresponding to the second processing core.

11. The method according to claim 10, further comprising:
receiving, based on a receiving channel of the target media access controller, inter-core reply data sent by the media access controller in the system-on-chip where the second processing core is located;
transmitting the inter-core reply data to the first buffer corresponding to the first channel; and
storing the inter-core reply data in the first buffer into the first address space corresponding to the first processing core.

12. The method according to any one of claims 1 to 7, further comprising:
determining first configuration information corresponding to a first virtual machine running on the first processing core, and second configuration information corresponding to a second virtual machine running on the second processing core;
allocating, in the memory, the first address space to the first processing core and allocating the second address space to the second processing core, based on address configuration information in the first configuration information and address configuration information in the second configuration information; and
allocating the first channel to the first processing core and allocating a second channel to the second processing core based on channel configuration information in the first configuration information and channel configuration information in the second configuration information.

13. An inter-core communication apparatus for a system-on-chip, comprising:
a generation module, configured to generate a communication request for inter-core communication between a first processing core and a second processing core;
a first determining module, configured to determine a target media access controller based on the communication request;
a first reading module, configured to read inter-core communication data from a first address space corresponding to the first processing core based on the communication request and the target media access controller; and
a transmission module, configured to transmit the inter-core communication data to a second address space corresponding to the second processing core based on the target media access controller, wherein the first address space and the second address space correspond to different address spaces in a memory.

14. A computer readable storage medium, wherein the storage medium stores a computer program, and the computer program is used for implementing the inter-core communication method for a system-on-chip according to any one of claims 1 to 12.

15. An electronic device, wherein the electronic device comprises:
a processor; and
a memory, configured to store processor-executable instructions, wherein
the processor is configured to read the instructions from the memory, and execute the instructions to implement the inter-core communication method for a system-on-chip according to any one of claims 1 to 12.
